# EUROPEAN PATENT APPLICATION

(11) **EP 4 604 000 A1**
(43) Date of publication of application: **20.08.2025**
(21) Application number: 25153904.5
(22) Date of filing: 24.01.2025
(51) Int. Cl.: G06F 21/60, H04L 9/00, H04L 9/06, H04L 9/40

(54) **METHOD FOR ENCRYPTING DATA IN AN ELECTRONIC SYSTEM AND CORRESPONDING SYSTEM**

(30) Priority: 13.02.2024 IT 202400002974
(71) Applicant: STMicroelectronics International N.V., 1228 Plan-les-Ouates, Geneva (CH)
(72) Inventor: PASCARIELLO, Vincenzo, I-81020 San Nicola la Strada (Caserta) (IT); BOSCO, Rosario, I-80055 Portici (Napoli (IT); CIOFFI, Antonella, I-81028 Santa Maria a Vico (Caserta) (IT)
(74) Representative: Buzzi, Notaro & Antonielli d'Oulx S.p.A.

(57) **Abstract**

Method for encrypting data in an electronic system, comprising
selecting (150) between performing on input data (D) a Triple Data Encryption Standard encryption (3D), obtaining (107) as output Triple Data Encryption Standard encrypted data (DX);or
performing on said input data a single DES encryption (SD) obtaining (107) as output single Data Encryption Standard encrypted data (DX),
said performing on said input data a Triple Data Encryption Standard encryption comprising
providing (101) said input data to a first cipher performing a Data Encryption Standard encryption, providing (103) its output data to second cipher performing a Data Encryption Standard decryption, providing (105) its output data to a third cipher performing a further Data Encryption Standard encryption, each of said first, second and third cipher receiving a respective encryption or decryption key (K1, K2, K3), at least the key (K1) supplied to the first cipher being different from the key (K2) supplied to the second cipher, obtaining said output Triple Data Encryption Standard encrypted data (DX),
said performing on said input data a single DES encryption comprising supplying (101) said input data to a first cipher performing (102) a DES encryption (EF1), providing (103) its output to a second cipher performing (104) a DES decryption outputting (105) data to a third cipher performing (106) a further DES encryption, each of said first (EF1), second (DF1) and third (EF2) cipher receiving a same encryption or decryption key (K), obtaining (107) as output single Data Encryption Standard encrypted data (DX).

## Description

### Technical Field

Embodiments of the present disclosure relate to methods for the secure encryption and decryption of data in an electronic system.

### Background

Fault attacks (FA) are a class of active physical attacks, mostly used for malicious purposes such as extraction of cryptographic keys. Fault attacks can induce errors in the computation or the memory of a target device, such as an integrated circuit or a smart card, by manipulating its physical environment. There are many techniques that can be used to cause the faults in integrated circuits, many of them coming from the area of failure analysis. For example, fault attacks can be performed by applying voltage or clock glitches, electromagnetic pulses, laser beams, or ionizing radiation. Fault attacks can be mounted on most used architectures by utilizing injection devices that are often below the thousand-dollar mark. Therefore, these attacks can be considered practical in many scenarios, especially when the attacker can physically access the target device. Fault attacks can target smart card programs to disrupt an execution and take control of the data or the embedded functionalities.

Among all possible attacks, control-flow attacks aim at disrupting the normal execution flow. For instance, an attacker can skip a security check, jump to a malicious code, or modify a return address. Control-flow attacks can compromise the integrity and the confidentiality of the device and its data.

Timing attack is another class of active physical attacks, mostly used for malicious purposes such as extraction of sensitive information. Timing attack exploits the time taken to execute cryptographic algorithms, which may vary depending on the input data or the secret key. By measuring and analyzing the execution time of different operations, an attacker can infer information about the secret key or the plaintext. Timing attacks can be applied to any algorithm that has data-dependent timing variation, such as modular exponentiation, elliptic curve scalar multiplication, or AES encryption. Sometimes, timing information is combined with cryptanalysis to increase the rate of information leakage.

In view of the above, it is clear that both fault attacks and timing attacks pose serious threats to the security of electronic systems and thus require effective countermeasures.

In particular, there is the pressing need of a secure method for selecting a cryptographic algorithm such as, for instance, Data Encryption Standard (DES) or Triple Data Encryption Standard (T-DES), which is meant to be employed during the execution of a program. Normally, this selection is performed through a conditional branch, which may be bypassed through a fault injection. In fact, as explained in the foregoing, a fault injection attack can disrupt the normal execution flow and force the execution of a cryptographic algorithm that is different from the desired one. In the context of a fault attack preparation, an attacker may try multiple attempts to inject faults in the system and, by analyzing the system power traces, may infer that a fault injection has been successful by noticing a different power trace from the expected one, thus obtaining information on when and where a fault should be injected in a system to modify its operation.

Moreover, an attacker may also exploit the different time durations of two cryptographic algorithms by a timing attack to discover the cryptographic algorithm employed in a program.

Known solutions may employ time-invariant algorithms to prevent timing attacks while, in order to prevent fault attacks, duplicated conditional controls such as, for instance, if-then clauses in the code, may be implemented. However, there is the drawback in that time-invariant executions are not always applicable or achievable. Furthermore, it is worth considering that existing countermeasures against fault attacks may prevent even from double injections, however such solutions are not future proof and may face troubles against attacks with triple fault injections.

Summarizing, a solution being capable of selecting a cryptographic algorithm such as, for instance, Triple Data Encryption Standard (T-DES) or Data Encryption Standard (DES), without resorting to the use of a conditional branch in the code, and being capable of performing the selectable cryptographic algorithms in such a way that they would require the same amount of time to execute, would consistently contribute to solve the aforementioned problems i.e., vulnerability to fault injections and timing attacks.

### Summary

On the basis of the foregoing description, the need is felt for solutions which overcome one or more of the previously outlined drawbacks.

According to one or more embodiments, such an object is achieved through methods having the features specifically set forth in the claims that follow.

The claims are an integral part of the technical teaching of the disclosure provided herein.

As mentioned previously, various embodiments of the present disclosure relate to a method for encrypting data in an electronic system, comprising
selecting if performing on input data between a performing on input data a Triple Data Encryption Standard encryption, obtaining as output Triple Data Encryption Standard encrypted data;
or performing on said input data a single DES encryption obtaining as output single Data Encryption Standard encrypted data,
said performing on said input data a Triple Data Encryption Standard encryption comprising
providing said input data to a first cipher performing a Data Encryption Standard encryption, providing its output data to second cipher performing a Data Encryption Standard decryption, providing its output data to a third cipher performing a further Data Encryption Standard encryption, each of said first, second and third cipher receiving a respective encryption or decryption key, at least the key supplied to the first cipher being different from the key supplied to the second cipher, obtaining said output Triple Data Encryption Standard encrypted data,
said performing on said input data a single DES encryption comprising supplying said input data to a first cipher performing a DES encryption, providing its output to a second cipher performing a DES decryption outputting data to a third cipher performing a further DES encryption, each of said first, second and third cipher receiving a same encryption or decryption key, obtaining as output single Data Encryption Standard encrypted data.

In variant embodiments, the method further comprises the steps of:
- providing a key;
- splitting said key in three key segments having equal length;
said steps of providing and splitting being performed prior providing said encryption keys to the respective encryption functions.

In variant embodiments, the method further comprises providing an encryption procedure which access an input data variable, output data variable, and a key variable which contains the respective encryption keys, where at least the key supplied to the first cipher being different from the key supplied to the second cipher, if the Triple DES is to be performed, or the unique key, if the Single DES is to be performed,
then performing a same function configured to apply a Triple DES sequence of said first cipher, second cipher and third cipher on the input data using the content of the provided key variable.

In variant embodiments, the encryption or decryption keys are instantiated by a key building method of an applet implementing said encryption, in particular buildKey of a KeyBuilder class of Java Card, with a length of a single key, two keys, or three key depending on the selected encryption algorithm having one, two or three different keys, a longer key with the length of three keys being then created by the operating system in which the applet operates, then the encryption is performed by initializing and executing said ciphers with said instantiated encryption or decryption keys.

In variant embodiments, the encryption key supplied to the first, second and third cipher are all different with respect to one another.

Furthermore, the present solution also relates to a method for decrypting data in an electronic system, encrypted with the encryption method of any of the above embodiments, comprising if the input encrypted data are encrypted with said Triple Data Encryption Standard encryption,
providing said encrypted input data to a fourth cipher performing a Data Encryption Standard decryption, providing its output data to fifth cipher performing a Data Encryption Standard encryption, providing its output data to a sixth cipher performing a further Data Encryption Standard decryption, each of said fourth, fifth and sixth cipher receiving a respective encryption key, at least the key supplied to the fourth cipher being different with respect to the key supplied to the fifth cipher, obtaining output Triple Data Encryption Standard decrypted data,
comprising if the input encrypted data are encrypted with said Single Encryption Standard encryption,
supplying said input data to said fourth cipher performing a DES decryption, providing its output to said fifth cipher performing a DES encryption outputting data to a sixth cipher performing a further DES decryption, each of said fourth, fifth and sixth cipher receiving said same encryption key, obtaining as output single Data Encryption Standard decrypted data.

In variant embodiments, the method further comprises the steps of:
- providing a key;
- splitting said key in three key segments having equal length;
said steps of providing and splitting being performed prior providing said encryption keys to the respective encryption functions.

In variant embodiments, the method further comprises providing a decryption procedure which access an input data variable, output data variable, and a key variable containing the respective encryption or decryption keys, where at least the key supplied to the fourth cipher being different with respect to the key supplied to the fifth cipher, if the Triple DES is to be performed, or the unique key, if the Single DES is to be performed,
then performing a same function configured to apply a Triple DES sequence of said fourth cipher, fifth cipher and sixth cipher on the input data using the corresponding content of the provided key variable.

In variant embodiments, the encryption or decryption keys are instantiated by a key building method of an applet implementing said decryption, in particular buildKey of a KeyBuilder class of Java Card, with a length of a single key, two keys, or three key depending on the selected decryption algorithm having one, two or three different keys, a longer key with the length of three keys being then created by the operating system in which the applet operates, then the decryption is performed by initializing and executing said ciphers with said instantiated encryption or decryption keys.

In variant embodiments, the encryption key supplied to the fourth, fifth and sixth cipher are all different with respect to one another.

Furthermore, the present solution also relates to an electronic system comprising a processor and one or more memories, configured to implement the method for encrypting data in an electronic system according to any of the encryption embodiments, and/or the method for decrypting data in an electronic system according to any of the decryption embodiments.

### Brief description of the figures

Embodiments of the present disclosure will now be described with reference to the annexed drawings, which are provided purely by way of non-limiting example and in which:
- Figure 1 shows a schematic representation of an encryption and decryption loop using Triple Data Encryption Standard according to an embodiment of the present solution;
- Figure 2 shows a schematic representation of an encryption and decryption loop using Data Encryption Standard according to an embodiment of the present solution;
- Figure 3 shows a block diagram of an electronic system configured to implement the encryption and decryption method of the solution here described.

### Detailed description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

The solution here described provides a solution for securely encrypting and decrypting data in an electronic system.

To this regard, in the context of cryptography, it is common practice to implement a selection operation through a selection code for selecting a specific cryptographic algorithm to be performed in a program code. However, as explained above, using selection constructs i.e., conditional branches, such as, for instance, if-then or switch-case clauses may expose the system to fault attacks, making it more vulnerable against malicious intromissions.

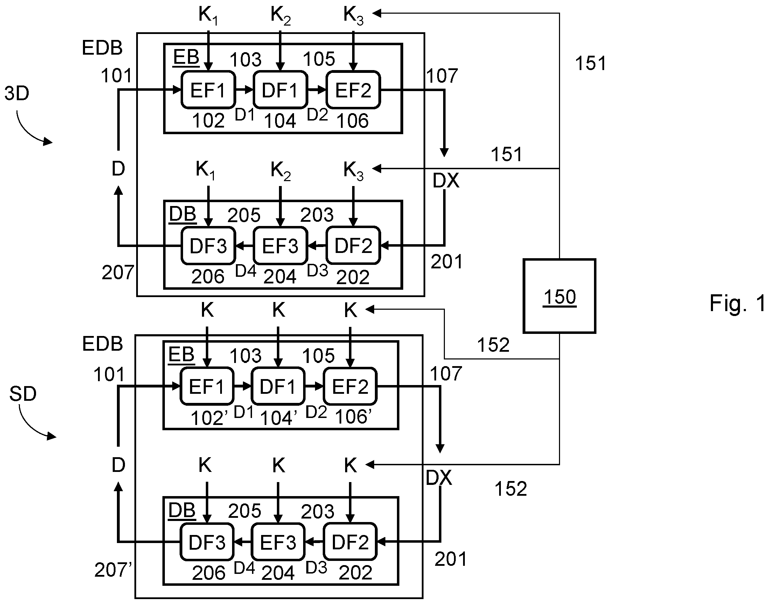

To this regard, with reference to Figure 1, an exemplary embodiment of a method for encrypting data according to the solution here described is illustrated. Specifically, Figure 1 illustrates a first example of encryption and decryption loop 3D, which, according to the present solution, implements a Triple DES.

Such loop 3D comprises a structure of block and arrows representing method operations or steps in an encryption decryption loop EDB which receives a plurality of encryption or decryption keys, namely K1, K2, K3, different with respect to one another, for loop 3D.

Figure 1 further illustrates a second example of encryption and decryption loop SD, which, according to the present solution, implements a single DES. Such loop SD comprises the same structure of block and arrows representing method operations or steps in an encryption decryption loop EDB which receives a plurality of encryption or decryption keys, in this case a same key K for all the encryption or decryption block, as better detailed below.

Therefore, the method according to the solution provides that a selection operation 150 simply chooses 151 the key, K1, K2, K3, i.e. to provide such keys to the loop EDB, if the TDES is chosen, or chooses 152 the unique key K, i.e. to provide such keys to the loop EDB, if the single DES is chosen in selection 150 providing 152 the unique key K, to be provided to a same operations sequence, i.e. encryption decryption loop EDB.

It is pointed out that in the method described the selection operation 150 happens outside the encryption decryption loop EDB, i.e., the encryption or decryption is performed without a selection of a loop performing the TDES or the single DES, the same loop EDB is used provided with respective encryption keys. Such key provision may be performed elsewhere, in another portion of the device, thus the conditional branch cannot be detected.

The encryption decryption loop EDB, is the one which use is known for the TDES, i.e. the choice 151 of keys K1, K2, K3 is performed, only, if the selection 150 is applied, the single key K is provided to the stage and a single DES is performed, only by the same three encryption stages EF1, DF1, EF2 (or six counting decryption, and stages DF2, EF2, DF3) which may be used for TDES with different key.

More specifically, as shown in Figure 1, the method here described provides that in the loop 3D in a first step 101, input data D and a first encryption key, which by the choice operation 151, i.e. key providing operation, is K1, are provided to a first encryption function EF1 belonging to an encryption block EB. In particular, the input data D may be a plaintext, readable without any need of decryption.

After providing the input data D and the first encryption key K1 to the first encryption function EF1, in a step 102 such first encryption function EF1 performs the encryption of the input data D using the first encryption key K1. In particular, the first encryption function EF1 implements a symmetric-key cryptographic algorithm, specifically the Data Encryption Standard (DES). After the encryption of the input data D is completed, the first encryption function EF1 produces as output temporary encrypted data D1.

As illustrated in Figure 1, in a step 103 the obtained encrypted data D1 is provided to a first decryption function DF1, along with a second encryption key K2.

Successively, in a step 104 the decryption function DF1 performs the decryption of the encrypted data D1 using the second encryption key K2. The first decryption function implements the same cryptographic algorithm, DES, only for decryption, i.e., has the same Feistel chain to which the subkeys of the second encryption key K2 has supplied in reverse order with respect to the subkeys of encryption key K1 of the encryption step 102. In particular, the encryption function EF1 and the decryption function DF1 may implement the Data Encryption Standard (DES) cryptographic algorithm. As the decryption of the encrypted data D1 is completed, the first decryption function DF1 produces as output temporary decrypted data D2. It is worth noting that if the first encryption key K1 and the second encryption key K2 are equal i.e., they have the same value, the obtained decrypted data D2 should correspond to the initial input data D. Conversely, if the first encryption key K1 and the second encryption key K2 are different, the obtained decrypted data D2 may be unreadable without a proper decryption step, that will be described in the following.

As illustrated in Figure 1, in a step 105 the obtained decrypted data D2 is provided to a second encryption function EF2, along with a third encryption key K3.

Successively, in a step 106 the second encryption function EF2 performs the encryption of the temporary data D2 using the third encryption key K3, also implementing the DES encryption. In particular, the first encryption function EF1, the first decryption function DF1, and the second encryption function EF2 may implement the Data Encryption Standard (DES) cryptographic algorithm. As the encryption of the decrypted data D2 is completed, the second encryption function EF2 produces as output encrypted data DX.

Finally, in a step 107, the encrypted data DX is outputted and made available to be accessed, e.g. by the device which has required the encryption, e.g., a Secure Element or an integrated card such as an eUICC or a UICC. The encryption block EB here described, comprising the first encryption function EF1, the first decryption function DF1, and the second encryption function EF2 implements a DES encryption, depending on the values assigned to the encryption key K1, K2 and K3, different with respect one another, thus implementing a Triple DES cryptographic algorithm.

Conversely, as shown more specifically in Figure 1, the method here described provides that to implement the single DES loop SD the same encryption decryption loop is used choosing as cryptographic algorithm for the encryption and decryption functions EF1, DF1, and EF2 the Data Encryption Standard algorithm, along with, by choice 152 of keys, i.e. provision of keys, three equal values K for the encryption keys of such functions EF1, DF1, and EF2, this resulting in the encryption block EB implementing a single DES cryptographic algorithm.

In particular, such configurations illustrated in Figure 1, offer the advantage that the time duration of the described cryptographic method is substantially the same regardless of the encryption key K1, K2 and K3 chosen, thus such solution may advantageously provide a T-DES and a DES encryption function which is able to mask the execution time of the cryptographic algorithm.

With reference to the first encryption and decryption loop 3D illustrated in Figure 1, a complementary method for decrypting data according to the present solution will be now described.

In a first step 201, encrypted input data DX and a third encryption key K3 are provided to a second decryption function DF2 belonging to a decryption block DB.

After providing the encrypted input data DX and the third encryption key K3 to the second decryption function DF2, in a step 202 such second decryption function DF2 performs the decryption of the encrypted input data DX using the third encryption key K3. In particular, the second decryption function DF2 may implement a symmetric-key cryptographic algorithm such as, for instance, the Data Encryption Standard (DES). After the decryption of the input data DX is completed, the second decryption function DF2 produces as output temporary decrypted data D3.

As illustrated in Figure 1, in a step 203 the obtained decrypted data D3 is provided to a third encryption function EF3, along with a second encryption key K2.

Successively, in a step 204 the third encryption function EF3 performs the encryption of the temporary decrypted data D3 using the second encryption key K2. It is important to note that the third encryption function should implement the same cryptographic algorithm as the aforementioned second decryption function DF2, as it should be able to successfully encrypt the decrypted data D3, which has been decrypted in the previous step 202. Otherwise, choosing a cryptographic algorithm different for the decryption and encryption functions DF2 and EF3 would lead to corruption of data and possible loss of information. For example, the encryption function EF3 and the decryption function DF2 may implement the Data Encryption Standard (DES) cryptographic algorithm. As the encryption of the decrypted data D3 is completed, the third encryption function EF3 produces as output temporary encrypted data D4. It is worth noting that if the third encryption key K3 and the second encryption key K2 are equal i.e., they have the same value, the obtained encrypted data D4 should correspond to the initial encrypted input data DX. Conversely, if the third encryption key K3 and the second encryption key K2 are different, the obtained decrypted data D4 may be unreadable without a proper decryption step, that will be described in the following.

Conversely, as illustrated in the single DES encryption and decryption loop SD of Figure 1, choosing as cryptographic algorithm for the encryption and decryption functions DF2, EF3, and DF3 the Data Encryption Standard algorithm, along with three equal values for the encryption key K1, K2 and K3 would result in the decryption block DB implementing a simple DES cryptographic algorithm.

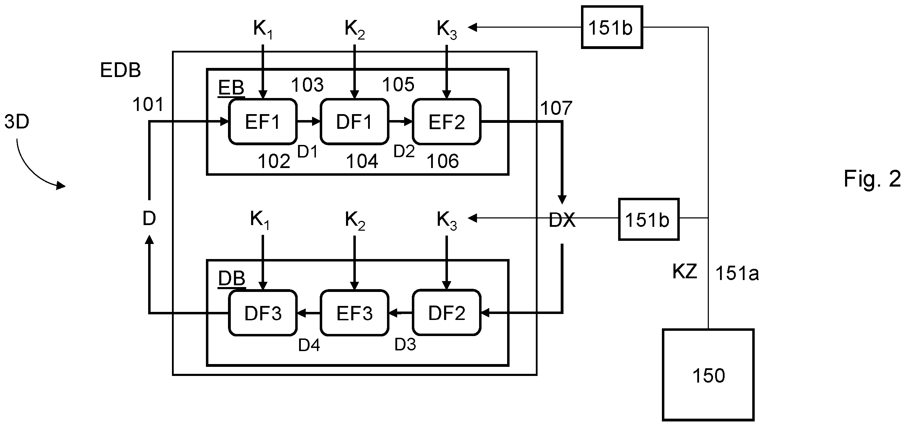

In particular, similar to the encryption method described above, such configurations illustrated in Figures 1 and 2, offer the advantage that the time duration of such decryption method is substantially the same, thus such solution may advantageously provide a T-DES and a DES encryption/decryption function which are able to mask the execution time of the cryptographic algorithm.

Regarding the TDES, in variant embodiments the TDES can be performed only with two different keys, i.e., K1 = K3, the same key for the encryption block EF1, EF2 and a different key K2 for the decryption DF1, i.e. at least the key, e.g., K1, supplied to the first cipher, EF1, is different only with respect to the key, e.g. K2, supplied to the second cipher, DF2. The same of course applies to the decryption, where at least the key K1 = K3 supplied to the fourth cipher, decryption DF2, and to the sixth cipher, decryption DF3, may be only different with respect to the key K2 supplied to the fifth cipher, encryption EF3.

In an alternative embodiment, as shown in Figure 2, where for simplicity only the TDES 3D is shown, although the same applies to the single DES SD, the method here described may further include a step 151a of providing a long key KZ, and subsequently a step 151b of splitting such long key KZ into three segments K1, K2 and K3, i.e. the T_DES keys, or three segments each corresponding to the single DES key K, of equal length. With this approach, it is possible to pass to an encryption function implementing the method for encrypting data, according to the solution here described, a single key value KZ instead of three separate values K1, K2 and K3, thus enhancing the security of the method. As mentioned above, the same may apply to single DES, SD, i.e. the second exemplary loop SD described with reference to Figure 1, the long key KZ K containing the repetition of three equal encryption keys K.

Regarding to the selection thus the solution shown above has the advantage of avoiding a conditional branch, i.e. the selection 150 is not a selection performed during the encryption or decryption, but it is an external provision to the loop EDB, which performs encryption and/or decryption, of either the different key K1, K2, K3 or the same key K.

By way of example, a typical code portion, or snippet, representing a selection construct for selecting a cryptographic algorithm may be, for instance as following:

```
     u1 DESRound(u1Ptr inputData, u1Ptr outputData,
     u1Ptr key, boolean is3DES) {
         if (is3DES == TRUE) {
              3DES(input, output, key);
         } else {
              DES(input, output, key)
         }
         return 8;
         }
```

In such an example, the encryption method, or routine, DESRound, which operates on the input data, to which points a pointer inputData, supplies output data to a location to which a pointer outputData points, while a pointer "key" points to the location of the encryption keys, the encryption method, or routine, DESRound execution depending on a Boolean variable is3DES, which value is checked in order to decide whether to apply a Triple DES (Data Encryption Standard), if its value is TRUE, indicated by 3DES, which uses the input data, the output data and an encryption key or keys, in the codes indicated by such respective labels "input", "output", "key", or a single DES cryptographic algorithm. Incidentally, having such selection construct would render the system vulnerable to fault injection, as explained in the beginning.

Conversely, a solution is proposed here having the capability of selecting the cryptographic algorithm which is meant to be performed in the code without making use of a selection construct such as, for instance, an if-then clause. This solution may be represented by a code snippet according to the following:

```
     u1 DESRound(u1Ptr inputData, u1Ptr outputData,
     u1Ptr key) {
         3DES(input, output, key);
         return 8;
     }
```

In such example it can be clearly appreciated that there are no if-then or similar clauses specifically depending on the value of a single Boolean variable. The method DESRound here has for arguments the same pointers inputData and outputData, and the pointer "key", but no Boolean variable is3DES. If it is applied a Triple DES or a single DES cryptographic algorithm is determined by the sole function implementing the cryptographic algorithms themselves, such as the 3DES(input, output, key) function of the aforementioned code snippet, depending on the content of the "key" variable, which can be different keys K1, K2, K3 or the unique key K. Accordingly, such function 3DES may be capable of selecting and performing one cryptographic algorithm, among the Triple DES and the single DES algorithm, on the basis of the encryption key, thus always without resorting to selection constructs.

Thus, the method here described may be implemented simply by comprising providing an encryption procedure which access an input data variable, inputData, output data variable, outputData, and a key variable key which contains the different keys K1, K2, K3, if the Triple DES is to be performed, or the unique key K, if the Single DES is to be performed,
then performing a same function, e.g. 3DES, configured to apply a Triple DES sequence of said first cipher, EF1, second cipher, DF1, and third cipher, EF2, on the input data using the content of the provided key variable, e.g. K1, K2, K3 or K.

This of course may apply also to the decryption, i.e. a decryption procedure which accesses an input data variable, such inputData, output data variable, such outputData, and a key variable, key, containing the different keys K1, K2, K3, if the Triple DES is to be performed, or the unique key K, if the Single DES is to be performed,
then performing a same function, e.g., the decryption portion of 3DES configured to apply a Triple DES of said fourth cipher, DF2, fifth cipher, EF3, and sixth cipher, DF3, on the input data using the corresponding content of the provided key variable, key.

In general, an electronic system comprising at least a processor may be configured to implement the method for encrypting data in an electronic system described with reference to Figures 1 and 2 and/or the method for decrypting data in an electronic system described with reference to the same Figures 1 and 2.

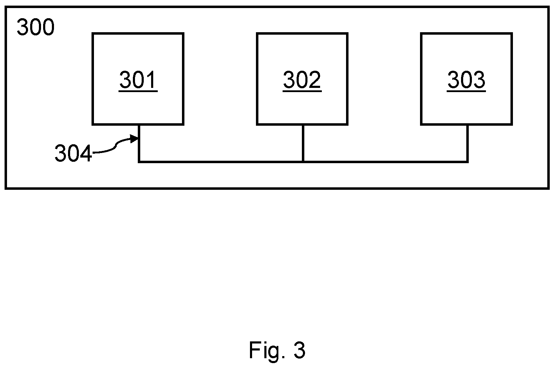

In order to provide a further understanding of the present solution, in Figure 3 a possible example of a system 300 configured to implement the method for encrypting and/or decrypting data according to the solution here described is illustrated. In particular, such system 300 may comprise a processor 301, coupled to a memory 302 and a storage area 303 by means of a system bus 304. Specifically, the memory 302 may be a volatile memory such a static random-access memory (SRAM) or a dynamic random-access memory (DRAM), whereas the storage area 303 may be implemented with a non-volatile memory such as a flash memory or an EEPROM. In particular, the processor 301 may receive requests to encrypt and decrypt data using the methods provided herein, the data being stored in the memory 302 and/or in the storage area 303. This is however only a possible example of an electronic system implementing the method, different architecture being possible. In particular, the architecture of such processing electronic system may be distributed and/or with a plurality of processors. For instance the selection block 150 may be arranged remotely with respect to a processor executing the code implementing the method, e.g. DESRound(u1Ptr inputData, u1Ptr outputData, u1Ptr key) described above, i.e. it may be a remote processing system providing the TDES keys K1, K2, K3 or the DES key K, to obtain TDES or Single DES encryption/decryption, according to the need of a program or a user operating in or with such remote processing system. The selection block 150 is simply representative of providing either the TDES keys K1, K2, K3 or the DES key K by an entity which is not necessarily operating in the same processing system, or, if is the same processing system or location, the selection block 150 is not operating within the encryption/decryption procedure, i.e. EDB, but just provides the key to the loop EDB.

In an eUICC card, for instance operating with Java Card, the loop EDB may executed as part of a call to another TDES/DES encryption/decryption service, e.g. applet. The first applet just provides the corresponding key according its choice of type of DES, Triple or Single.

It is specified that to implement either the single-DES or the triple-DES, a corresponding key or keys has to be set and then the cipher algorithm is initialized and executed. For example, in a Java Card applet, the method buildKey of KeyBuilder class is called to instantiate a DES key of length 8 bytes for the single-DES, 16 bytes for the T-DES with two keys and 24 bytes for the T-DES with three keys. Typically, the operating system handles these calls by creating an object of length 8, 16, or 24 bytes. With the proposed method, this mechanism is transparent for the user, so the user continues to call these methods with different lengths, but the operating system creates always an object of 24 bytes where, in case of single DES the key is repeated three times, while in case of T-DES with 2 keys, the first key is repeated in the third key.

Thus, the key must be loaded before calling an encryption algorithm, and the type of algorithm (DES or T-DES) is associated to a different key length, which is however inserted in a same length object key. For example, for the implementation of a DES encryption in a Java Card applet one have to first create the object key, then create the object cipher, and finally call the encryption function.

Thus in the method here described said encryption or decryption key, e.g. K1, K2, K3 or K may be instantiated by a key building method, namely of a key building class, in the sense of an object oriented language, of an applet, in particular a method buildKey of the KeyBuilder class of Java Card, with a length of a single key, e.g. 8 bytes, two keys, e.g., 16 bytes, or three key depending on the selected encryption algorithm, with one, two or three different keys, a key with 24 bytes, e.g. corresponding to the long key KZ discussed above, being then created by the operating system in which the applet operates. As mentioned, after in this way a corresponding key or keys has been set in the 24-byte key, or long three keys length, e.g. the long key KZ, and then the cipher algorithm, in particular by the instantiated cipher object, is initialized and executed, with the keys, K1, K2, K3, or K1, K2, K3 = K1 or three times K, which has been set as indicated above.

As mentioned such system may be embodied, by a Secure Element, eSe (Embedded Secure Element), UICC or eUICC, or other type of integrated circuit card.

On the basis of the description above, one may appreciate that, in accordance with the solution here described, the system 300 implementing the method for encrypting data and/or the method for decrypting data may advantageously perform the aforementioned method steps while retaining a sufficient degree of security e.g., without exposing sensible information concerning the cryptographic algorithm employed for the encryption/decryption operations, and without employing selection constructs and Boolean variables, such as flags, for selecting the cryptographic algorithm which is meant to be employed. Accordingly, such features would provide to the system 300 increased robustness against timing attacks and fault injections.

Moreover, the present solution also provides the advantage of simplifying the program code with respect to solutions implementing flow control of duplicated conditional branches.

Thus, on the basis of the description above, the solution here described advantageously provides a
method for encrypting data in an electronic system, comprising
selecting, e.g., like in block 150, between performing on input data, such as plaintext D, a Triple Data Encryption Standard encryption, e.g., loop 3D, obtaining, e.g., 107 as output Triple Data Encryption Standard encrypted data, e.g., DX;
or performing on said input data a single DES encryption , e.g., SD obtaining , e.g.,107 as output single Data Encryption Standard encrypted data, e.g., DX,
said performing on said input data a Triple Data Encryption Standard encryption comprising
providing, e.g.,101 said input data to a first cipher, such as EF1, performing a Data Encryption Standard encryption, providing, e.g.,103 its output data to second cipher, such as DF1, performing a Data Encryption Standard decryption, providing, e.g.,105 its output data to a third cipher, such as EF2, performing a further Data Encryption Standard encryption, each of said first, second and third cipher receiving a respective encryption or decryption key, e.g., K1, K2, K3, at least the key , e.g., K1, supplied to the first cipher being different from the key, e.g.,K2 supplied to the second cipher, obtaining said output Triple Data Encryption Standard encrypted data, e.g. data DX,
said performing on said input data a single DES encryption comprising supplying, e.g., 101 said input data to a first cipher performing, e.g., 102 a DES encryption, e.g., EF1, providing, e.g.,103 its output to a second cipher performing, e.g., 104, a DES decryption outputting , e.g.,105 data to a third cipher performing, e.g.,106 a further DES encryption, each of said first, e.g.,EF1, second , e.g.,DF1 and third, e.g.,EF2 cipher receiving a same encryption or decryption key, e.g., the unique key K, obtaining , e.g.,107 as output single Data Encryption Standard encrypted data , e.g., DX.

Furthermore, the solution here described also provides a method, which is complementary to the encrypting method above, for decrypting data in an electronic system, encrypted with the encryption method above, comprising if the input encrypted data are encrypted with said Triple Data Encryption Standard encryption,
providing, e.g., 201 said encrypted input data to a fourth cipher, e.g., DF2 performing, e.g., 202 a Data Encryption Standard decryption, providing, e.g., 203 its output data to fifth cipher, e.g., EF3 performing, e.g., 204 a Data Encryption Standard encryption, providing, e.g., 205 its output data to a sixth cipher , e.g., DF3 performing a further Data Encryption Standard decryption, each of said fourth, fifth and sixth cipher receiving a respective encryption key , e.g., K1, K2, K3, at least the key, e.g., K1 supplied to the fourth cipher being different with respect to the key , e.g., K2 supplied to the fifth cipher, obtaining output Triple Data Encryption Standard decrypted data , e.g., D,
comprising if the input encrypted data are encrypted with said Single Encryption Standard encryption,
supplying , e.g., 201 said input data to said fourth cipher performing; e.g., 202 a DES decryption; e.g., DF2, providing; e.g., 203 its output to said fifth cipher performing; e.g., 204 a DES encryption outputting; e.g., 205 data to a third cipher performing; e.g., 206 a further DES decryption, each of said first; e.g., DF2, second; e.g., EF3 and third; e.g., DF3 cipher receiving said same encryption key; e.g., K, obtaining; e.g., 207 as output single Data Encryption Standard encrypted data; e.g., DX.

Various figures depict circuits and other components with block figures. These figures should not be taken to mark the physical boundaries of the corresponding components. As will be appreciated, physical components may be dispersed throughout a SoC (System On Chip).

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. Method for encrypting data in an electronic system, comprising
selecting (150) between performing on input data (D) a Triple Data Encryption Standard encryption (3D), obtaining (107) as output Triple Data Encryption Standard encrypted data (DX); or
performing on said input data a single DES encryption (SD) obtaining (107) as output single Data Encryption Standard encrypted data (DX),
said performing on said input data a Triple Data Encryption Standard encryption comprising
providing (101) said input data to a first cipher performing a Data Encryption Standard encryption, providing (103) its output data to second cipher performing a Data Encryption Standard decryption, providing (105) its output data to a third cipher performing a further Data Encryption Standard encryption, each of said first, second and third cipher receiving a respective encryption or decryption key (K1, K2, K3), at least the key (K1) supplied to the first cipher being different from the key (K2) supplied to the second cipher, obtaining said output Triple Data Encryption Standard encrypted data (DX),
said performing on said input data a single DES encryption comprising supplying (101) said input data to a first cipher performing (102) a DES encryption (EF1), providing (103) its output to a second cipher performing (104) a DES decryption outputting (105) data to a third cipher performing (106) a further DES encryption, each of said first (EF1), second (DF1) and third (EF2) cipher receiving a same encryption or decryption key (K), obtaining (107) as output single Data Encryption Standard encrypted data (DX).

2. Method according to Claim 1, further comprising the steps of:
- providing (151a) a key (KZ);
- splitting (151b) said key (KZ) in three key segments (K1, K2, K3; K) having equal length;
said steps of providing (151a) and splitting (151b) being performed prior providing (101, 103, 105) said encryption keys (K1, K2, K3; K1, K2; K) to the respective encryption functions (EF1, DF1, EF2).

3. Method according to Claim 1 or 2, comprising providing an encryption procedure which access an input data variable (inputData), output data variable (outputData), and a key variable (key) which contains the respective encryption keys (K1, K2, K3), where at least the key (K1) supplied to the first cipher being different from the key (K2) supplied to the second cipher, (K1, K2, K3), if the Triple DES is to be performed, or the unique key (K), if the Single DES is to be performed,
then performing a same function (3DES) configured to apply a Triple DES sequence of said first cipher (EF1), second cipher (DF1) and third cipher (EF2) on the input data using the content of the provided key variable (K1, K2, K3; K) .

4. Method according to any of claims 1 to 3, wherein said encryption or decryption keys (K1, K2, K3; K1, K2; K) are instantiated by a key building method of an applet implementing said encryption, in particular buildKey of a KeyBuilder class of Java Card, with a length of a single key, two keys, or three key depending on the selected encryption algorithm having one, two or three different keys, a longer key (KZ) with the length of three keys being then created by the operating system in which the applet operates, then the encryption is performed by initializing and executing said ciphers with said instantiated encryption or decryption keys (K1, K2, K3; K1, K2; K) .

5. Method according to any of claims 1 to 3, wherein the encryption key (K1, K2, K3) supplied to the first, second and third cipher are all different with respect to one another.

6. Method for decrypting data in an electronic system, encrypted with the encryption method of any of Claims 1 to 5, comprising if the input encrypted data are encrypted with said Triple Data Encryption Standard encryption,
providing (201) said encrypted input data to a fourth cipher (DF2) performing (202) a Data Encryption Standard decryption, providing (203) its output data to fifth cipher (EF3) performing (204) a Data Encryption Standard encryption, providing (205) its output data to a sixth cipher (DF3) performing a further Data Encryption Standard decryption, each of said fourth, fifth and sixth cipher receiving a respective encryption key (K1, K2, K3), at least the key (K1) supplied to the fourth cipher being different with respect to the key (K2) supplied to the fifth cipher, obtaining output Triple Data Encryption Standard decrypted data ( D ),
comprising if the input encrypted data are encrypted with said Single Encryption Standard encryption,
supplying (201) said input data to said fourth cipher performing (202) a DES decryption (DF2) providing (203) its output to said fifth cipher performing (204) a DES encryption (EF3) outputting ( 205) data to a third cipher performing ( 206) a further DES decryption (DF3), each of said first (DF2), second (EF3) and third (DF3) cipher receiving said same encryption key (K), obtaining (107) as output single Data Encryption Standard decrypted data ( D).

7. Method according to Claim 6, further comprising the steps of:
- providing (151a) a key (KZ);
- splitting (151b) said key (KZ) in three key segments (K1, K2, K3; K) having equal length;
said steps of providing (151a) and splitting (151b) being performed prior providing (201, 203, 205) said encryption keys (K1, K2, K3; K) to the respective encryption functions (DF2, EF3, DF3).

8. Method according to Claim 6 or 7, comprising providing a decryption procedure which access an input data variable (inputData), output data variable (outputData), and a key variable (key) containing the respective encryption or decryption keys (K1, K2, K3), where at least the key (K1) supplied to the fourth cipher being different with respect to the key (K2) supplied to the fifth cipher,; if the Triple DES is to be performed, or the unique key (K), if the Single DES is to be performed,
then performing a same function (3DES) configured to apply a Triple DES sequence of said fourth cipher (DF2), fifth cipher (EF3) and sixth cipher (DF3) on the input data using the corresponding content of the provided key variable (key).

9. Method according to any of claims 6 to 8, wherein said encryption or decryption keys (K1, K2, K3; K) are instantiated by a key building method of an applet implementing said decryption, in particular buildKey of a KeyBuilder class of Java Card, with a length of a single key, two keys, or three key depending on the selected decryption algorithm having one, two or three different keys, a longer key (KZ) with the length of three keys being then created by the operating system in which the applet operates, then the decryption is performed by initializing and executing said ciphers with said instantiated encryption or decryption keys (K1, K2, K3; K1, K3; K) .

10. Method according to any of claims 6 to 8, wherein the encryption key (K1, K2, K3) supplied to the fourth, fifth and sixth cipher are all different with respect to one another.

11. Electronic system (300) comprising a processor (301) and one or more memories (302, 303), configured to implement the method for encrypting data in an electronic system according to any of Claims 1 to 5, and/or the method for decrypting data in an electronic system according to any of Claims 6 to 9.
